(19) Europäisches Patentamt
European Patent Office
Office européen des brevets

(11) **EP 3 212 441 B1**

(12) **EUROPEAN PATENT SPECIFICATION**

(45) Date of publication and mention of the grant of the patent:
**05.12.2018 Bulletin 2018/49**

(51) Int Cl.:
**B60C 9/20** *(2006.01)*      **B60C 9/08** *(2006.01)*
**B60C 9/02** *(2006.01)*

(21) Application number: **14796643.6**

(22) Date of filing: **29.10.2014**

(86) International application number:
**PCT/US2014/062893**

(87) International publication number:
**WO 2016/068908 (06.05.2016 Gazette 2016/18)**

(54) **OPTIMAL BODY PLY SHAPE FOR HEAVY TRUCK TIRE INCLUDING BELT PLIES IN CROWN PORTION**

OPTIMALE KARKASSENLAGENFORM FÜR SCHWERLASTKRAFTWAGENREIFEN MIT GÜRTELLAGEN IM KRONENBEREICH

FORME DE NAPPE DE CARCASSE OPTIMALE POUR PNEU DE VEHICULE POIDS LOURD COMPORTANT DES NAPPES DE RENFORT DE SOMMET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.09.2017 Bulletin 2017/36**

(73) Proprietor: **Compagnie Générale des Etablissements Michelin**
**63000 Clermont-Ferrand (FR)**

(72) Inventors:
• **CLAYTON, Bill**
**Greenville, South Carolina 29605 (US)**

• **HICKS, Daniel, McEachern**
**Greenville, South Carolina 29605 (US)**

(74) Representative: **Casalonga**
**Casalonga & Partners**
**Bayerstraße 71/73**
**80335 München (DE)**

(56) References cited:
**EP-A2- 0 103 984      WO-A1-2011/070111**
**FR-A1- 2 796 005**

**Description**

**FIELD OF THE INVENTION**

The subject matter of the present disclosure relates generally to a novel shape for the body ply, or carcass, of a tire including a wide-based single tire.

**BACKGROUND OF THE INVENTION**

The body ply of a tire, also referred to sometimes as the carcass or carcass ply, extends from the bead portions, through both opposing sidewall portions, and the crown portion of the tire. One or more layers that include substantially inextensible materials referred to e.g., as cords are typically used in its construction. For a radial tire, these cords are typically oriented at greater than about 80 degrees as measured from an equatorial plane of the tire within the crown portion. In a pneumatic tire, the body ply helps constrain inflation pressure and determine the overall shape of the tire upon inflation. When the tire is inflated to a given pressure, the body ply will assume a particular shape or profile in the meridian plane that is referred to as the equilibrium curve.

Body ply design poses a challenge for all tires and particularly for wide-based single (WBS) tires, which are tires that typically have a relatively wide crown portion and may be used to replace a pair of tires each having a relatively narrow crown portion. All tires, particularly WBS tires, commonly have a difference in rigidity between the center of the tire and the shoulder portions. This difference can be particularly pronounced as compared with either of the dual conventional tires that a single WBS tire replaces. The difference in rigidity can lead to uneven growth of the tire as it is inflated including differences in growth along the crown portion where the tread is located. As a result, the tire can experience enhanced motion of the shoulders compared with the center when the tire is rolling, which can create issues such as groove bottom cracking in the tread and an enhanced sensitivity of the contact patch shape to load variations.

For a heavy truck tire, uneven inflation growth can also cause the tire to experience a break-in period (e.g., the first thousand miles or so) during initial use. During the break-in period, the rubber of the tire experiences viscoelastic relaxation due to the stresses created by uneven inflation growth. As a result, the shape or profile of the tire evolves in order to dissipate the stress. Such evolving shape impedes the ability to optimize the design of the tire for tread wear performance - resulting in a tread wear rate that is typically unacceptably high during the break-in period.

Conventionally, the equilibrium curves used for tire design and construction are based upon a traditional three-ply membrane model. Unfortunately, because of the large difference in rigidity between the center and the shoulder portions of the tire, particularly a WBS tire, this traditional model can yield a tire with uneven inflation growth. Again, this uneven inflation growth can create a flex point in shoulder of the tire, which can place large stresses on shoulder groove bottoms and reduce the rigidity of the shoulder portions relative to the center of the tire.

Previous attempts to achieve even inflation growth have focused on e.g., adding structural stiffness to the belt package in the crown portion so as to mechanically restrain unwanted inflation growth and/or adding rubber portions in an effort to shape inflation growth. Unfortunately, these approaches increase the cost of the tire as well as the mass of the tire. Increased mass can adversely affect tire performance such as rolling resistance. EP 0 103 984 relates to a method of manufacturing a radial tire in an effort to reduce rolling resistance without adversely affecting wet traction. WO 2011/070111 relates to a tire for heavy vehicles that includes certain reinforcements. FR 2 796 005 relates to a tire with a tread including certain reinforcing fabric(s).

Thus, a tire employing a body ply that provides for more uniform inflation growth would be useful. Having these features in a tire such as e.g., a WBS tire that can also prevent or deter e.g., groove bottom cracking in the tread, decrease sensitivity to load variations, reduce or eliminate the break-in effect, and/or provide other benefits would be useful. Achieving these advantageous benefits without increasing the mass or deleteriously affecting the rolling resistance or other performance criteria would be particularly beneficial. A method of creating or designing such a tire would also be useful.

**SUMMARY OF THE INVENTION**

Additional objects and advantages of the invention will be set forth in part in the following description, or may be apparent from the description, or may be learned through practice of the invention.

The present invention provides a tire according to claim 1.

In one exemplary embodiment of the present invention, the present invention provides a tire defining a radial direction, an axial direction, and a tire centerline. The tire includes a pair of opposing bead portions; a pair of opposing sidewall portions connected with the opposing bead portions; and a crown portion connecting the opposing sidewall portions. At least one body ply extends between the bead portions and through the sidewall and crown portions, the body ply having a curve along a meridian plane, wherein s is the length in mm along the curve from the centerline of the tire.

This exemplary tire includes at least two belt plies positioned in the crown portion, each belt ply including belt ply reinforcement elements that are crossed with respect from one belt ply to the other belt ply, the reinforcement elements forming an angle $\pm\ \alpha$ with respect to an equatorial plane of the tire having an absolute value of between 10° and 45°. For this tire, $s_M$ denote one-half of the maximum curvilinear width, along the axial direction, of the widest belt ply in the meridian plane of the at least two belt plies. A circumferential layer is provided that includes circumferential reinforcement elements and has a width along the axial direction which in some embodiments may exceed the axial width of each of the belt plies.

When a basis curve having three points of tangency p, d, and q is constructed for the body ply, along at least one side of the tire centerline the body ply has

i) a deviation $D(s)$ from the basis curve in the range of - 4.25 mm $\leq D(s) \leq$ 0.5 mm at a point $P_1 = 0.13s_q + 0.87\ s_M$ - 56.6 mm, and

ii) a deviation $D(s)$ from the basis curve in the range of - 0.5 mm $\leq D(s) \leq$ 1.25 mm at a point $P_2 = 0.8s_q + 0.2\ s_M$ - 13 mm; where $s_q$ is the length along the curve of the basis curve at which point q occurs.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 illustrates a view of a cross-section of an exemplary embodiment of a tire of the present invention. The cross-section is taken along a meridian plane of the tire and is not necessarily drawn to scale.

FIG. 2 illustrates a cross-sectional view of an exemplary body ply along a meridian plane. Only one half of the curve representing the body ply is shown - i.e. the portion of the curve along one side of the tire centerline at $s = 0$.

FIG. 3 is a cross-sectional view along a meridian plane of two curves representing the deviation of a curve $\overrightarrow{X_0}$ from a reference curve $\overrightarrow{R_0}$ at a point $s_0$.

FIG. 4 is a cross-sectional view along a meridian plane that illustrates the change in the shape of a body ply when inflated between a reference pressure and a nominal pressure.

FIG. 5 is a plot of inflation growth for a conventional tire and a tire having an inventive body ply of the present invention.

FIG. 6 illustrates components in the construction of a basis curve for the curve of a body ply.

FIG. 7 is a front view of an exemplary tire of the present invention.

FIG. 8 is a cross-sectional view, along a meridian plane, of an exemplary body ply of the present invention and basis curve constructed from the exemplary body ply.

FIGS. 9, 10, 11, 12, 13, 16, and 17 are plots of deviation as a function of curve length as more fully described herein.

FIGS. 14, 15, 18 are plots of inflation growth as a function of curve length as more fully described herein.

FIGS. 19 and 20 are plots of inflation growth for deviations at points $P_1$ and $P_2$ as further described herein.

FIG. 21 is a cross-sectional view of a groove of a tire modeled to determine the first principal Cauchy stress P1 as more fully described herein.

FIGS. 22 illustrates a cross-sectional view of an exemplary embodiment of a tire of the present invention. FIG. 23 illustrates another cross-sectional view of an exemplary embodiment of a tire of the present invention. The cross-sections are in each view are taken along a meridian plane of the tires and are not necessarily drawn to scale.

## DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment, can be used with another embodiment to yield a still further embodiment. Thus, it is intended that the present invention covers such modifications and variations as come within the scope of the appended claims and their equivalents.

As used herein, the following definitions apply:

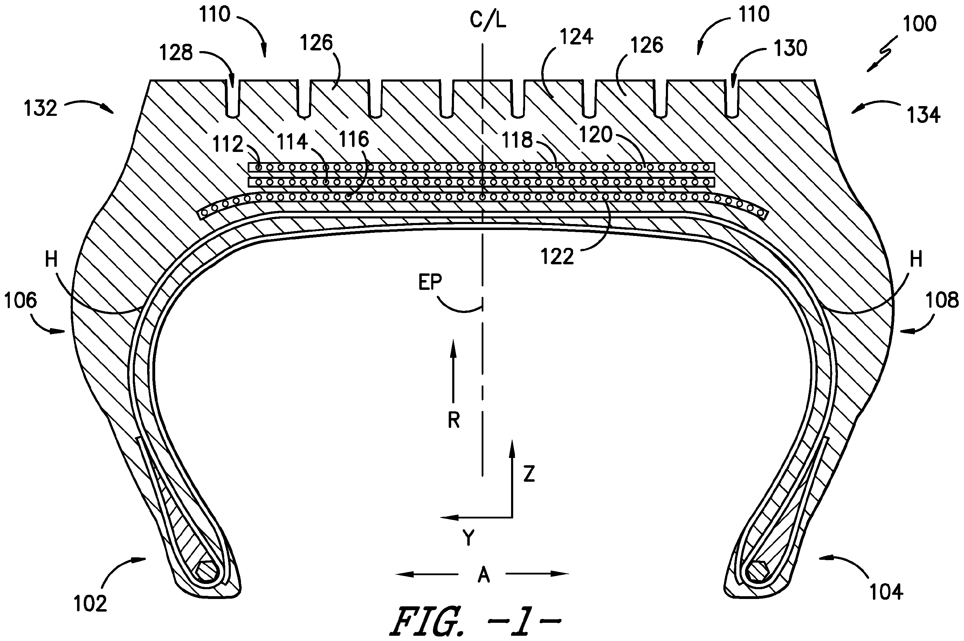

"Meridian plane" is a plane within which lies the axis of rotation of the tire. FIG. 1 is a cross-section of an exemplary tire 100 of the present invention taken along a meridian plane. As used herein, the meridian plane includes the y-z plane of a right-handed Cartesian coordinate system where y = 0 is located along the centerline C/L of the tire, and x is perpendicular to the axis of rotation, tangent to the circumference of the tire, and parallel at the point of contact to a flat surface over which the tire is rolling.

The "center line" (C/L) of the tire is a line that bisects the tire, as viewed in the meridian plane, into two halves.

"Equatorial plane" is a plane perpendicular to the meridian plane that bisects the tire along its center line (C/L). As used herein, the equatorial plane EP includes the x-z plane of a Cartesian coordinate system.

The "crown portion" of the tire is the portion that extends along the axial direction A (which is the direction parallel to the axis of rotation of the tire) between the sidewall portions of the tire and includes the tread and components positioned radially inward of the tread. The crown portion and its components extend circumferentially around the tire.

"Body ply" or "carcass" or "carcass ply" is a ply that, as viewed in the meridian plane, extends between and from the bead portions on opposing sides of the tire, through the opposing sidewall portions, and across the crown portion of the tire. As used herein, a body ply has reinforcements such as e.g., cords that are at an angle of 10 degrees or less from the meridian plane.

"Belt ply" is a ply that, as viewed in the meridian plane, is located primarily in the crown portion, radially inward of the tread portion, and radially outward of the body ply. A belt ply does not extend past the shoulder portions of a tire.

"Equilibrium curve" or "curve of the body ply" refers to a model of the shape or geometry of a body ply as viewed in the meridian plane of the tire. The tire, including the body ply, will assume an equilibrium shape when mounted onto a wheel or rim and inflated. An equilibrium curve can be used e.g., to model the shape of the body ply in this equilibrium condition.

"Maximum sidewall pressure" means the maximum inflation pressure of the tire that is typically marked on the tire's sidewall.

The "radial direction" is perpendicular to the axis of rotation of the tire. A Cartesian coordinate system is also employed in the following description where the y-axis is parallel to the axis of rotation and the z-axis is parallel to the radial direction. The "circumferential direction" refers to rotations about the y axis.

"Section width" refers to the greatest overall width of the tire along the axial direction as viewed along a meridian plane, which typically occurs at the tire equator. "Section height" refers to the greatest overall height of the tire along the radial direction as viewed along a meridian plane and typically extends from the bottom of a bead portion to the top of the crown portion.

"Aspect ratio" is that ratio of the tire's section height to its section width.

Tires sizes are referred to herein according to conventions published and used by the Tire and Rim Association as will be understood by one of skill in the art.

The use of terms such as belt, bead, and/or ply herein and in the claims that follow does not limit the present invention to tires constructed from semi-finished products or tires formed from an intermediate that must be changed from a flat profile to a profile in the form of a torus.

FIG. 1 provides a cross-section along a meridian plane of an exemplary embodiment of a tire 100 of the present invention. Tire 100 includes a pair of opposing bead portions 102, 104. A pair of opposing sidewall portions 106, 108 is connected with the opposing bead portions 102, 104. A crown portion 110 connects the opposing sidewall portions 106, 108. One or more belt plies 112, 114, and 116 are positioned in crown portion 110. Belt plies 112, 114, and 116 are layers reinforced with elements such as cords 118, 120, and 122 - the cords of each layer forming the same or different angles with the equatorial plane EP (which may also be referred to as the x-z plane if this meridian plane is placed in the y-z plane). In one exemplary embodiment, tire 100 of the present invention includes at least one belt ply having cords or other reinforcements at an angle from the equatorial plane EP of 5 degrees or less. In another exemplary embodiment, a tire of the present invention includes at least one belt ply having cords or other reinforcements that are parallel to the equatorial plane EP - i.e. form an angle of about zero degrees with the equatorial plane EP. These embodiments would include, e.g., a wavy or curvy belt that averages less than 5 degrees over its length or about zero degrees over its length along the circumferential direction C.

At least one exemplary body ply H of the present invention extends between the bead portions 102, 104, passing through opposing sidewall portions 106, 108 and crown portion 110. The body ply contains cords or other reinforcement oriented at angles from the meridian plane typically of 10 degrees or less (i.e. 80 degrees or more from the equatorial plane EP). For example, such reinforcements for the body ply H may include materials that are nominally inextensible such as e.g., metal cable, aramid, glass fibers, and/or carbon fiber components.

A tread portion 124 is located in the crown portion 110 radially outward of the belt plies 112, 114, and 116. Tread portion 124 includes ribs 126 separated by grooves such as first groove 128 and 130 along each shoulder portion 132 and 134. It should be noted that the present invention is not limited to the particular size or appearance of tire 100 shown in FIG 1. Instead, the present invention may also be used with tires having e.g., different widths, aspect ratios, tread features, and belts from what is shown in FIG. 1 - it being understood that tire 100 is provided by way of example only. Additionally, the present invention is not limited to body ply H having an upturn around a bead core as shown for bead portions 102, 104. Instead, other body plies having ends otherwise terminating in bead portions 102, 104 may be used as well.

In one exemplary embodiment, tire 100 has an aspect ratio in the range of 50 to 80. In another exemplary embodiment, tire 100 has a section width in the range of 275 to 455 mm. In still another exemplary embodiment, tire 100 has a section width in the range of 445 to 455 mm. Other dimensions and physical configurations may be used as well.

As stated above, the present invention provides a tire having a more uniform inflation growth - i.e. the growth of the tire as it is inflated - across the entire body ply H of the tire. The extent of uniformity can be specified e.g., through the tire's inflation growth amplitude *A,* which is defined herein. The inventive tire's uniform inflation growth reduces load sensitivity, reduces or eliminates the break-in period, and/or decreases the propensity for cracking - particularly along one or more groove bottoms in the shoulder region e.g., grooves 128 and/or 130∥ of the tread portion 124 of tire 100.

In a typical tire manufacturing process, tires are cured in a mold where they take on their final geometry. Conventionally, the body ply is typically designed to be as close to equilibrium as possible in the mold for ease of manufacturing. For the present invention, an inventive body ply H (of which the body ply H in FIG. 1 is one example) is provided that deviates from the conventional equilibrium curve - i.e. the conventional geometry or shape for the body ply. It has been found that this inventive deviation compensates for a structural effect, typical of a reinforced composite, which occurs near the end of the belts in the shoulder portion 132 and/or 134 of the tire. In addition, the inventors discovered that by positioning body ply H such that it deviates, i.e. is displaced from, a conventional equilibrium curve in a particular manner (specified herein as deviation *D)* along the shoulder, sidewall, and bead portions, uniform inflation growth is achieved.

As used herein, the term "inflation growth" can be quantified and understood more fully with reference to the difference between two curves. More particularly, assume that *R* is a reference curve denoting the shape of a body ply in the meridian plane, that *X* is another curve denoting the shape of another body ply in the meridian plane, and that $D_{RX}$ designates the deviation of curve *X* from curve *R* along a direction towards curve *X* from curve *R* that is normal to curve *R* at any given point. Assume also that curves *R* and *X* are coplanar and lie in the same y-r plane in the well-known polar, cylindrical coordinate system. Curves *R* and *X* can be specified in the Cartesian y-z plane because any y-r plane can be rotated into the y-z plane - i.e. the meridian plane as defined herein.

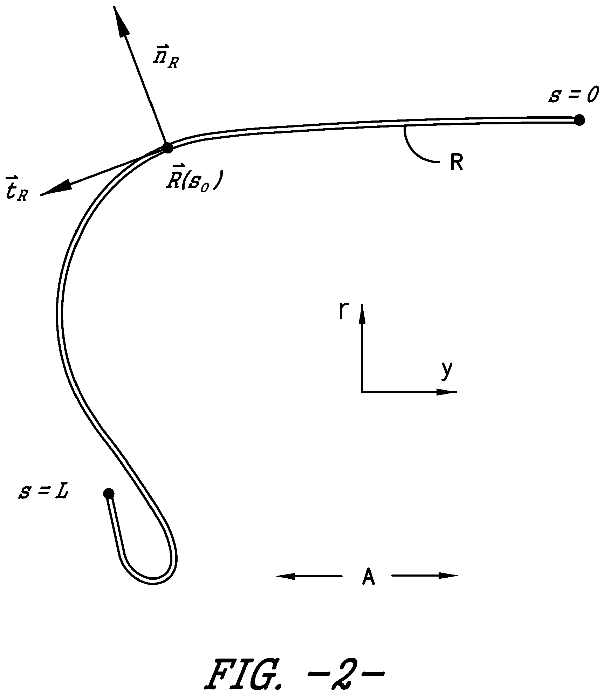

With reference to FIG. 2, reference curve *R* can be parameterized as a function of its curve length *s* by defining

$$\vec{R} = \vec{R}(s) = [y(s), z(s)].$$

Let curve length s be defined as a parameter which is an element of the set extending from zero to *L*, that is $s \in [0, L]$, where *L* is the total length of the curve *R* from *s* = 0 (because reference curve *R* can represent a body ply, *L* is also referred to herein as the body ply half-length). This curve has tangent vector

$$\vec{t}_R = \frac{\partial \vec{R}}{\partial s} = \left[\frac{\partial y}{\partial s}, \frac{\partial z}{\partial s}\right]$$

and normal vector

$$\vec{n}_R = \left[\frac{\partial z}{\partial s}, -\frac{\partial y}{\partial s}\right].$$

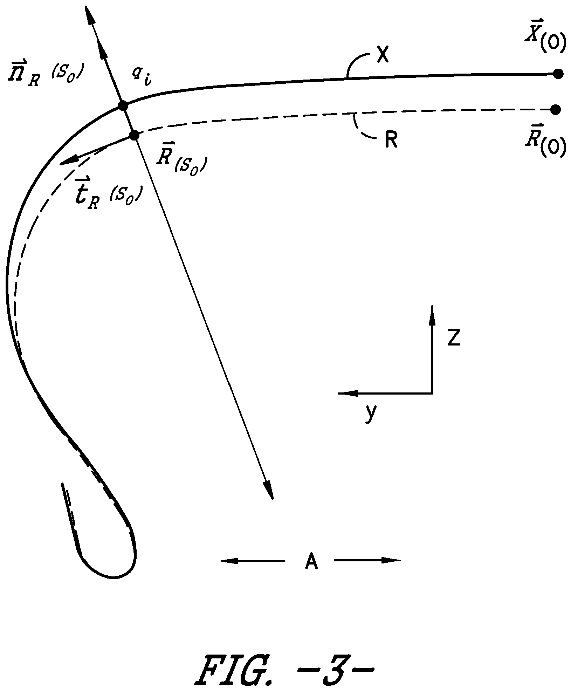

Accordingly, the distance $D_{RX}(s_0)$ between the curve *R* at the point $R(s_0)$ and curve *X* is defined in the following manner as illustrated in FIG. 3:

1. Locate the point $R(s_0)$ and calculate the normal to the curve $\vec{n}_R(s_0)$ at this point.

2. Create a ray collinear to $\vec{n}_R(s_0)$ that passes through $R(s_0)$. This ray will intersect the curve *X* at a set of points $\{q_i\}$.

3. Define $D_{RX}(s_0)$ as $D_{RX}(s_0) = \min_i\|q_i - R(s_0)\|$, which is the minimum of the Euclidean distance between points $q_i$ and $R(s_0)$. This definition ensures that the closest point will be chosen if the normal ray intersects curve *X* at more than one point.

Continuing with FIG. 3, if curve *X* represents body ply H (i.e. the shape of body ply H as viewed along a meridian plane) of exemplary tire 100 after inflation and reference curve *R* represents the body ply H before such inflation, then the inflation growth at any point can be determined as $D_{RX}(s_0) \equiv \min_i\|q_i - R(s_0)\|$ as set forth above. As an example, if tire 100 is cut in the y-z plane (i.e. the meridian plane), body ply H will define a curve *C* that can be parameterized as a function of its curve length s:

$$\vec{C} = \vec{C}(s) = [y(s), z(s)].$$

Curve *C* has tangent vector

$$\vec{t}_C = \frac{\partial \vec{C}}{\partial s} = \left[\frac{\partial y}{\partial s}, \frac{\partial z}{\partial s}\right]$$

and normal vector

$$\vec{n}_C = \left[\frac{\partial z}{\partial s}, -\frac{\partial y}{\partial s}\right].$$

Similarly, the interior surface *I* and exterior surface *E* of tire 100 can also be described by curves $I(s_1)$ and $E(s_2)$ with normal vectors $\vec{n}_I$ and $\vec{n}_E$, respectively.

Using these definitions, in one exemplary method of the present invention, inflation growth can be measured between a very low pressure state (referred to herein as the "reference pressure"), e.g., 0.5 bar, and the desired design pressure of the tire (referred to herein as the "nominal pressure" - which could be e.g., the maximum sidewall pressure). Preferably, the reference pressure is high enough to seat a bead portion 102, 104 of tire 100 on a wheel rim but low enough to avoid otherwise changing the shape of tire 100. More particularly, to keep the boundary conditions unchanged between these two pressure states, for this exemplary method, the position of the bead portion 102, 104 of the tire 100 on the rim is fixed in the position it occupies at the nominal pressure. Such can be accomplished experimentally through the use of an internal bead support, for example, and can also be easily simulated or modeled with e.g., a computer using finite element analysis (FEA) or computer aided design programs.

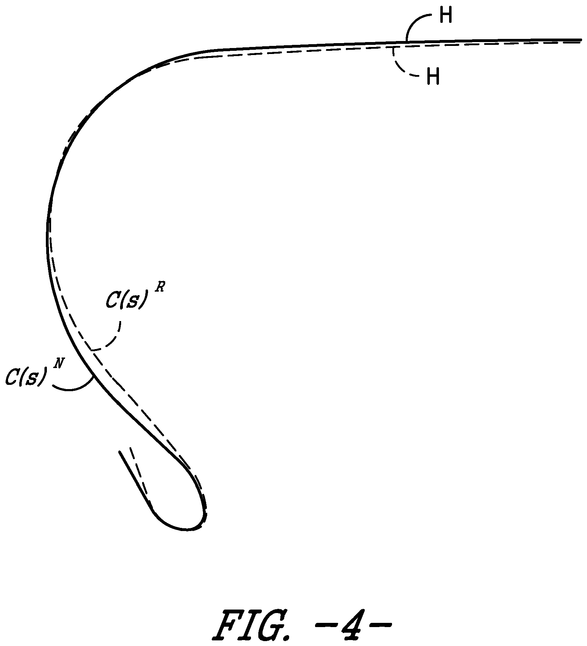

Next, measurements of tire 100 are made that yield the curves $I, E$ and/or $C$ at any desired azimuth. For example, the curve $C(s)$ for body ply H can be measured directly (e.g., by x-ray techniques) or obtained from a computer model by FEA. As illustrated in FIG. 4, the two body ply curves obtained with the above specified boundary conditions can be defined as $C(s)^N$ (the body ply curve at the nominal pressure) and $C(s)^R$ (the body ply curve at the reference pressure). The inflation growth $G(s_0)$ of the body ply at a point $s_0$ is then defined as $G(s_0) \equiv D_{CR(s_0)CN}$.

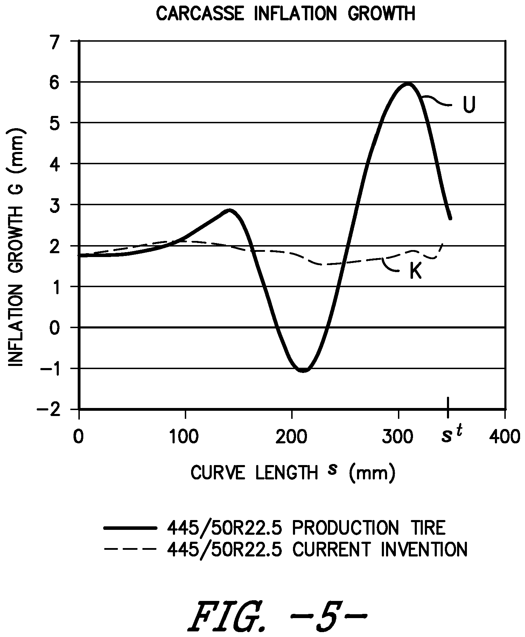

Plot U of FIG. 5 illustrates the results of applying this exemplary method for measuring inflation growth to a conventional 445/50R22.5 WBS tire using FEA at a reference pressure of 0.5 bar and a nominal pressure of 8.3 bar. With y = 0 (and $s$ = 0) at the tire centerline C/L, the tread portion for this conventional tire extends from -195 mm (millimeters) to +195 mm. Plot U illustrates the inflation growth along only one side of the tire (i.e. to the left of the centerline C/L), it being understood that the results would be substantially symmetrical for a tire constructed symmetrically about the tire centerline.

For the production tire, a large peak in plot U occurs at approximately 142 mm along curve length $s$. As the tire is symmetrical, this means that the two peaks occurring at $\pm$ 142 mm align closely with the position of the first shoulder groove 120 or 130 of the tread portion 124 and place the groove bottom under strong tensile extension, which greatly facilitates crack nucleation and propagation. This strong growth, coupled with the sharp decrease in growth at the edge of the tread band, acts to bend the crown portion 110 of the tire in the location of the groove 128 or 130. This introduces a hinge point into the crown of the tire at each such point so that the tire bends structurally rather than acting pneumatically - thereby reducing the tire's overall vertical rigidity. This hinge point occurs with or without the presence of a shoulder groove but is particularly problematic when it coincides with the location of a groove in the tread.

Additionally, because the degree of bending at this hinge point is a function of load, the tire's footprint experiences rapid evolution at the shoulders 132 and 134 relative to the center line C/L of the tire as the load changes. For example, at high loads the shoulders 132 and 134 have too much length in contact with the ground relative to the center. Conversely, at lower loads the shoulders 132 and 134 become too short relative to the center; they may even lose contact with the ground entirely at the lowest usage loads. This phenomenon, known as load sensitivity, is undesirable for the even and regular wear of the tread band and results in reduced removal mileage for the tire.

The present invention solves these and others problems by providing for a flat and stable inflation growth curve across the entire body ply H (e.g., from bead portion 102 to bead portion 104) as represented by the exemplary plot K in FIG. 5. These curves end at a point $s_t$, which will be defined herein. The inflation growth of the inventive tire as shown in plot K varies within a narrow range from the tire centerline C/L to a point $s_t$ and without sharp peaks or valleys.

For example, as also shown in FIG. 5, in the sidewall portion (extending from approximately $s$ = 184 mm to $s$ = 256 mm) of the plot U of the conventional tire, the body ply exhibits a significant trough in which inflation growth $G$ becomes negative. This means that the conventional tire pulls radially inward in this region when inflated to the nominal pressure. Because of the large surface area of this annular region, large forces are exerted on the crown portion of the tire, which in turn exerts a large radial force on the shoulder region, resulting in the aforementioned hinge effect. The inventive body ply H of the present invention removes this trough and accompany undesirable internal stresses and enables growth with much smaller changes. More particularly, the present invention provides uniform inflation growth from bead portion 102 to bead portion 104 without the substantial peaks and valleys of the conventional tire constructions. The absence of peaks and valleys in quantified herein with reference to a defined term - inflation growth amplitude $A$.

The exemplary inflation growth represented by plot K is obtained by providing a certain inventive geometry or curve for the exemplary body ply H (along one or both sides of the centerline C/L) of tire 100 as viewed in the meridian plane. The location of this inventive curve for body ply H is specified and claimed herein with reference to the deviation $D$ from a "basis curve" (denoted as BC in the figures) that can be unambiguously constructed for any desired tire. More particularly, the basis curve BC can be unambiguously constructed from measurements of a physical specimen of an actual tire or constructed from one or more models of a tire such as e.g., a computer simulated model or a model from computer aided design (CAD) - as will be understood of one of skill in the art. As such, the basis curve BC is used herein to provide a clear reference for future measurements and for specification of the location of the body ply of the present invention.

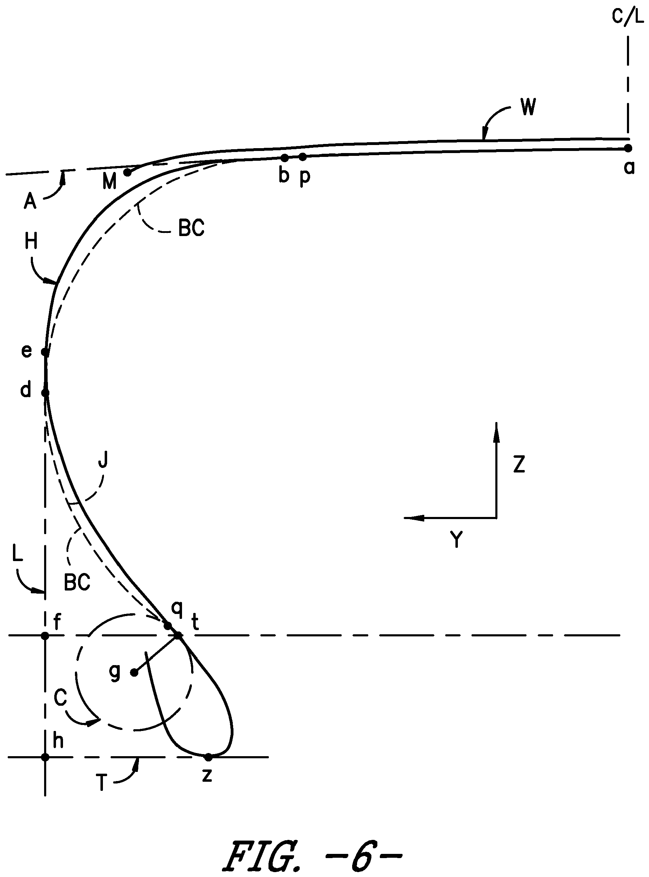

Accordingly, "basis curve" or "basis curve BC" as used in this description and the claims that follow is defined and constructed as will now be set forth with reference to the exemplary profile of a hypothetical tire having a belt ply W and body ply H as shown in FIG. 6. It should be understood that a tire of the present invention may have more than one belt ply. Belt ply W is used to represent the belt ply having the longest belt length along the axial direction - i.e. the widest belt along the y-direction as viewed in the meridian plane. For example, as shown in FIG. 1, belt ply 122 is the widest belt ply and would be represented by belt ply W in FIG. 6. Referring to FIG.6, in addition to the longest belt length along the axial direction, belt ply W is also the longest of the belts having cords or similar reinforcements that are at angle $\alpha$ in the range of about -80 degrees $\leq \alpha \leq$ + 80 degrees with respect to the equatorial plane EP. As such, this definition for belt ply W excludes any belt in the crown portion 110 that may be effectively functioning as a body ply.

As part of the method of constructing the basis curve BC for body ply H (or any other body ply for which a basis curve BC is to be constructed for reference), the shape of body ply H is determined using the shape body ply H assumes when the tire is mounted on the application wheel rim at a reference inflation pressure of 0.5 bar (designated e.g., as $C(s)^R$ in FIG. 4) with such wheel rim providing the boundary conditions as set forth above in the discussion of inflation growth. As stated, in the case of an actual physical specimen of the tire, the shape of body ply H in the meridian plane under such low inflation conditions can be measured experimentally using e.g. X-ray techniques or laser profilometry. In the case of a model of the tire such as e.g., a computer generated model, the shape of body ply H in the meridian plane under such low inflation conditions can be determined using e.g., finite element analysis (FEA) or computer-aided design programs.

FIG. 6 illustrates the shape of a portion of body ply H of tire 100 as viewed in the meridian plane, and only one half of body ply H is shown. The basis curve, denoted in FIG. 6 as BC, and the remaining description of the invention will be set forth using the left hand side (negative y) of the y-z plane (i.e. the portion of the tire to the left of the centerline C/L as viewed in FIG. 1), it being understood that the invention is symmetric for tire crown portions having symmetric belt architectures (i.e. with respect to a 180° rotation about the z-axis). The application of the procedure described here to non-symmetric belt architectures will be readily understood by one of skill in the art using the teachings disclosed herein. The intersection of body ply H and the y = 0 line defines the point a at the tire centerline C/L. Body ply H can be parameterized in the y-z plane by the curve $C^R(s)$, where $s$ is the curve length measured from point a, which is defined by the intersection of the centerline with the body ply, and the tire has been inflated to the reference pressure as defined above. Clearly s $\in$ [0,L], where L is the body ply half-length (i.e. one-half of the entire length of body ply H as measured along curve $C^R(s)$ in the meridian plane).

Next, considering all belt plies (such as e.g., plies 112, 114, and 116 in FIG. 1) in the crown portion of the tire that have cords at an angle $\alpha$ in the range of about -80 degrees $\leq \alpha \leq$ + 80 degrees with respect to the equatorial plane EP, point M is defined be a point located at the end of the widest of all such belts as viewed in the meridian plane (i.e. belt W for this example), with parameter $s_M$ representing the maximum curvilinear half-width along the axial direction of such belt W in the meridian plane. Additionally, $s_b$ is defined as $s_b = s_M$ - 65 mm, and the point b is defined as b = $C^R(s_b)$.

Using the definitions above, basis curve BC is constructed from two parts. Continuing with FIG. 6, the first part of basis curve BC includes an arc of a circle A of crown radius $r_s$ beginning at point a and passing through point b. The crown radius $r_s$ is determined by requiring the arc to be tangent to a horizontal line at point a. Note that this is equivalent to requiring that the center of the circle describing the arc lie on the z axis..

To specify the second part J of basis curve BC, several additional points are now defined for this description and the claims that follow. First, let $s_e$ be the parameter value for which body ply H takes on its minimum value in y, and let $s_z$ be the parameter value for which body ply H takes on its minimum value in z. The equator point e is defined as e = $C^R(s_e)$ = $(y_e, z_e)$ and the point z is defined as z = $C^R(s_z)$ = $(y_z, z_z)$.

L is defined a vertical line passing through point e. Point h, which is h = $(y_h, z_h)$, is the intersection between a horizontal line T passing through point z and line L. It should be noted that point h does not in general lie on body ply H. Define distance n as n = $\|e - h\|$ i.e., the Euclidean distance between points e and h.

Now an intermediate point f, not necessarily on the body ply H, is defined with respect to point h as f = $(y_h, z_{h +}$ 0.3*n). A horizontal line is constructed through point f and its point of intersection with body ply H is defined as point t, which occurs at parameter $s_t$ so that t = $C^R(s_t)$. A circle C is constructed with a radius of 20 mm that is also tangent to the body ply at point t. The center of the circle is defined to be the point g located 20 mm from body ply H along the line defined by the normal to the body ply $\vec{n}_C^R(s_t)$ at point t.

Accordingly, the second part of the basis curve BC includes a radial equilibrium curve J in a manner that can be readily determined in the following manner. As will be understood by one of skill in the art, a radial equilibrium curve is characterized by 2 parameters: $r_c$, the center radius, and $r_e$, the equator radius. Here r is the usual cylindrical polar radial coordinate and is equal to z when in the y-z plane. The radial equilibrium curve can be described by a differential equation and can also be unambiguiously constructed starting from the center radius by calculating the tangent angle $\varphi$ and curvature $\kappa$ of the curve at each subsequent radius. The expressions for the tangent angle and curvature for a radial equilibrium curve are well known and are given as follows:

## Equations 1 and 2

$$\sin\varphi \;=\; \frac{\left(r^2 - r_e^2\right)}{\left(r_c^2 - r_e^2\right)} \qquad\qquad \kappa \;=\; \frac{2r}{\left(r_c^2 - r_e^2\right)}$$

To uniquely determine the parameters $r_c$ and $r_e$ of radial equilibrium curve J, a tri-tangency condition is imposed. First, radial equilibrium curve J must be tangent to arc A. The point of tangential intersection of these two curves will occur at a point p ≠ b in general. The point b is projected in a fashion perpendicular to the reference curve for body ply H onto the basis curve BC to obtain its equivalent. Typically the point p will intersect the arc laterally outward of point b, in which case this projection is unnecessary as it simply yields the original point b. The second requirement of tri-tangency is that the radial equilibrium curve J and the line L must be tangent to each other, which occurs at a point designated as point d in FIG. 6. In general, the point of tangency d ≠ e. The third requirement of tri-tangency is that the radial equilibrium curve J must be tangent to circle C, which occurs at point q as shown in FIG. 6 and referenced in the claims that follow. As also referenced in the claims that follow, point q occurs at curve length $s_q$ along body ply H. In general, this point of tangency q ≠ t. These constraints uniquely determine the radial equilibrium curve J.

Accordingly, basis curve BC is defined to be the union of the arc segment A from a to p with the radial equilibrium curve J between points p and q, i.e. basis curve BC = $A \cap J$. The values of $r_c$ and $r_e$ for the radial equilibrium curve can be determined by many means known to one of ordinary skill in the art. For example, one method would be to begin by taking $r_c = z_b$ and $r_e = z_e$ and then iterating to find a solution.

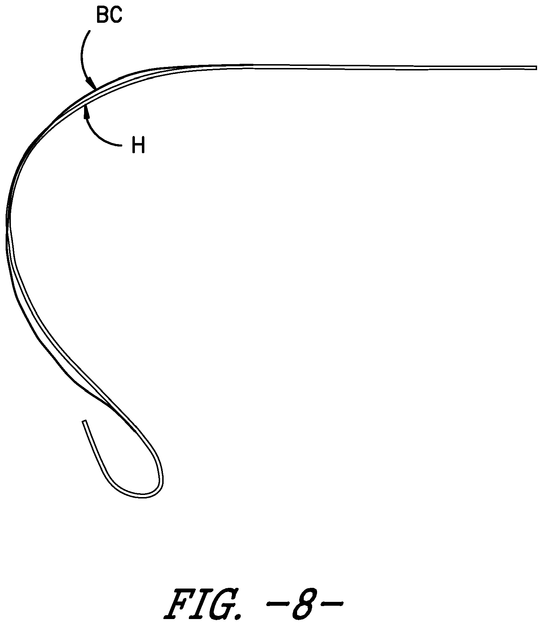

Referring now to FIG. 8, the above definition is used to construct a basis curve BC for exemplary body ply H. As shown, the new geometry or shape of the exemplary body ply H of the present invention differs substantially from the shape of the basis curve BC along the shoulder and sidewall regions of tire 100 under reference pressure conditions. This inventive geometry of the exemplary body ply H can be delineated by specifying its deviation, $D_{BC-H}$, from the basis curve BC parametrically as a function of curve length s as will be described.

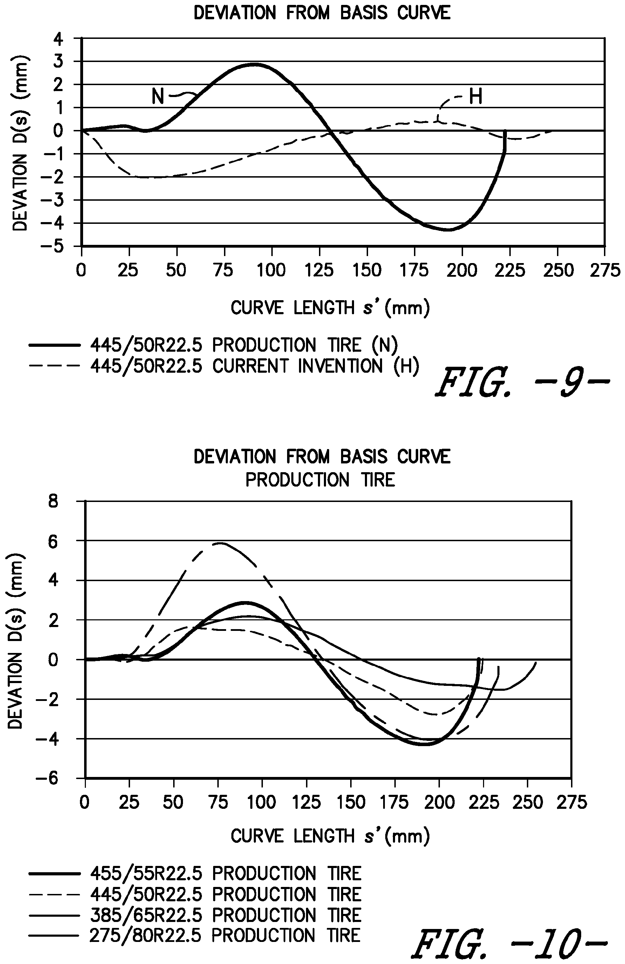

By introducing a shifted parameter s' = s - $s_b$, it can also be observed that the inventive new body ply H deviates in a systematic manner from conventional tires as the width of the tires change. As illustrated in FIG. 9, the deviation $D(s')$ of the inventive body ply H from basis curve BC is novel and distinctive as compared to the deviation $D(s')$ from the basis curve BC of a body ply N for a conventional tire. For example, not only is the magnitude of the absolute value of the deviation $D(s')$ for inventive body ply H different, the direction of deviation from the basis curve BC for inventive body ply H is opposite to that of the conventional body ply N. More particularly, for significant portions along its length s, inventive body ply H is located on a different side of the basis curve BC than the body ply N for the conventional tire.

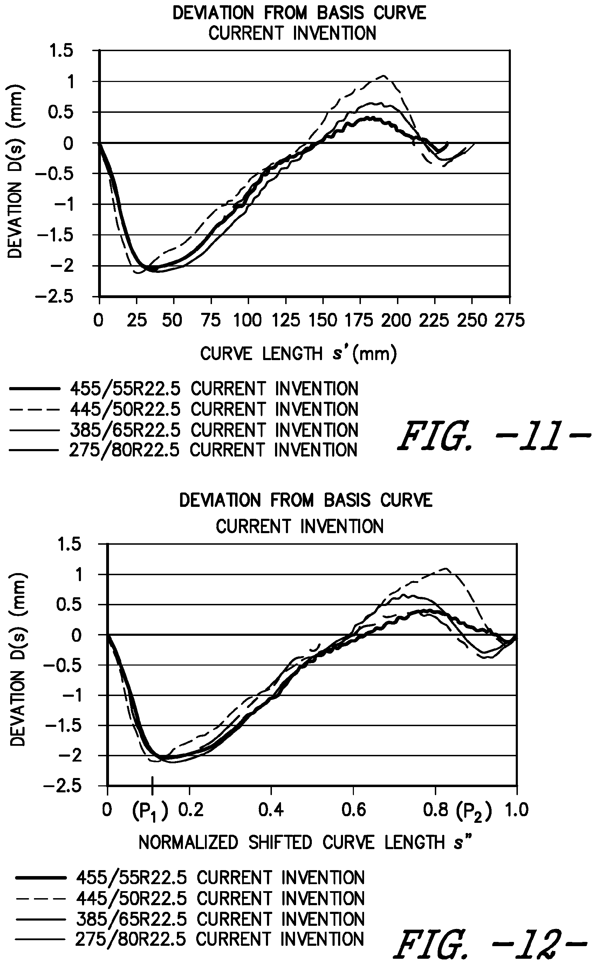

FIG. 10 illustrates deviation $D(s')$ of four conventional tires plotted as a function of the shifted parameter s'. As shown, deviation $D(s')$ is different for each of the four conventional tires. By way of comparison, FIG. 11 illustrates deviation $D(s')$ for the same four tire sizes as used in FIG. 10 equipped, however, with inventive body ply H. As shown, deviation $D(s')$ is systematic and, for certain portions of s', on an opposite side of basis curve BC from the conventional body plies of the same tire sizes.

Additionally, with reference to FIG. 11, the inventors discovered that the form of the curves shown are constant and alignment between all tires sizes results when the deviation from the basis curve BC is plotted as a function of a normalized and shifted parameter s", defined as follows:

## Equation 3

$$s'' \;=\; \frac{s - s_b}{s_q - s_b}$$

where $s_b$ = the value of the parameter s at point b, previously defined as $s_M$ - 65 mm

$s_q$ = the value of parameter s at point q, as previously defined.

The use of the parameter s" normalizes e.g., the deviation for tires of different tread widths, section widths and rim dimensions.

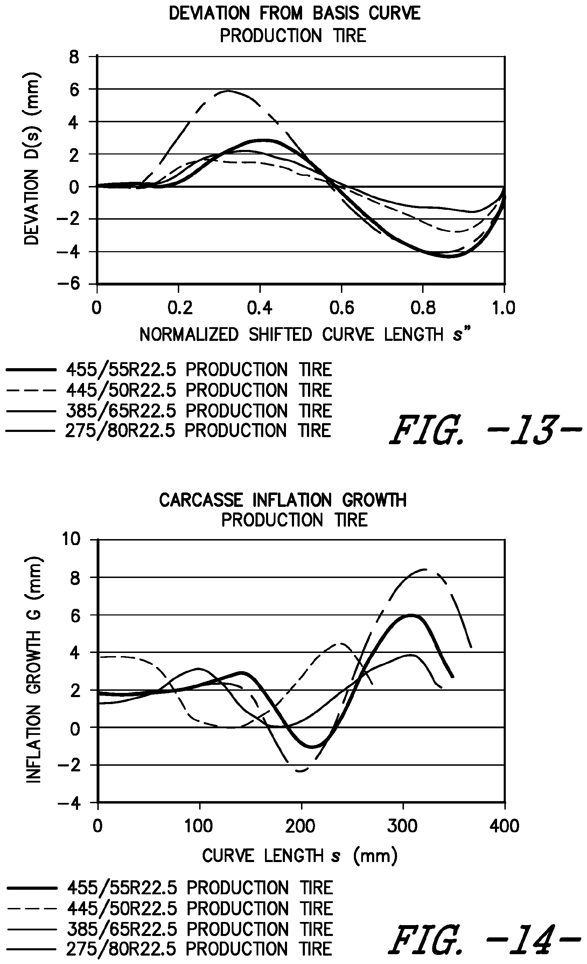

As shown in FIG. 12, plots of the deviation $D(s'')$ as a function of s" reveals an alignment between four tires of different sizes provided within the body ply H of the present invention. By comparison, FIG. 13 provides plots of deviation $D(s'')$ as a function of $s''$ of four conventional tires of the same size without inventive body ply H. Similar to the above discussion, the direction and magnitude of the deviation $D(s'')$ is different for tires having the inventive body ply H as compared to the conventional tires of the same size.

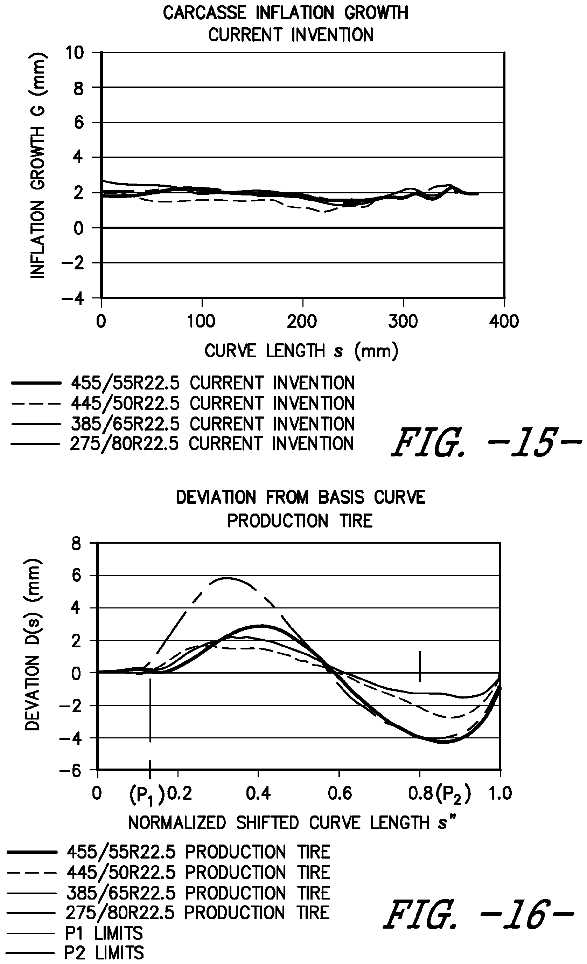

Importantly, the inventive body ply H results in the desired uniform inflation growth $G$. FIG. 14 is a plot of inflation growth $G$ (in mm) for the same four conventional tires as used in FIGS. 10 and 13. As shown, inflation growth $G$ is not uniform over the curve length $s$ for these conventional tires. By comparison, FIG. 15 provides plots of inflation growth $G$ for the same tires sizes equipped with the inventive body ply H. Each tire has uniform inflation growth over the entire length $s$ of the inventive body ply H.

Returning to FIG. 12, the inventors discovered that the plot of deviation $D(s'')$ reveals two key locations along the inventive body H corresponding to the minimum and maximum peaks in the plots:

$P_1$, which occurs at $s'' = 0.13$
$P_2$, which occurs at $s'' = 0.8$

Using equation 2 above and substituting for $s_b = s_M - 65$ mm leads to following for points $P_1$ and $P_2$ along curve length $s$ of body ply H where for its deviation $D(s'')$ from basis curve BC:

Equation 4

$$P_1 \text{ occurs at } s = 0.13 s_q + \left\lfloor 0.87\, s_M \right\rfloor - 56.6 \quad \text{(units in mm)}$$

Equation 5

$$P_2 \text{ occurs at } s = 0.8 s_q + \left\lfloor 0.2\, s_M \right\rfloor - 13 \quad \text{(units in mm)}$$

By maintaining the deviation $D(s)$ from basis curve BC at points $P_1$ and $P_2$ within a specified range, the desired uniform inflation growth $G$ for the inventive body ply H can be obtained. More particularly, at point $P_1$ the deviation $D(s)$ from the basis curve should be maintained within a range of $- 4.25$ mm $\leq D(s) \leq - 0.5$ mm, and at point $P_2$ the deviation $D(s)$ from the basis curve should be maintained within a range of $- 0.5$ mm $\leq D(s) \leq 1.25$ mm. As used herein, the expression of a range of for $D(s)$ includes the endpoints of the specified range.

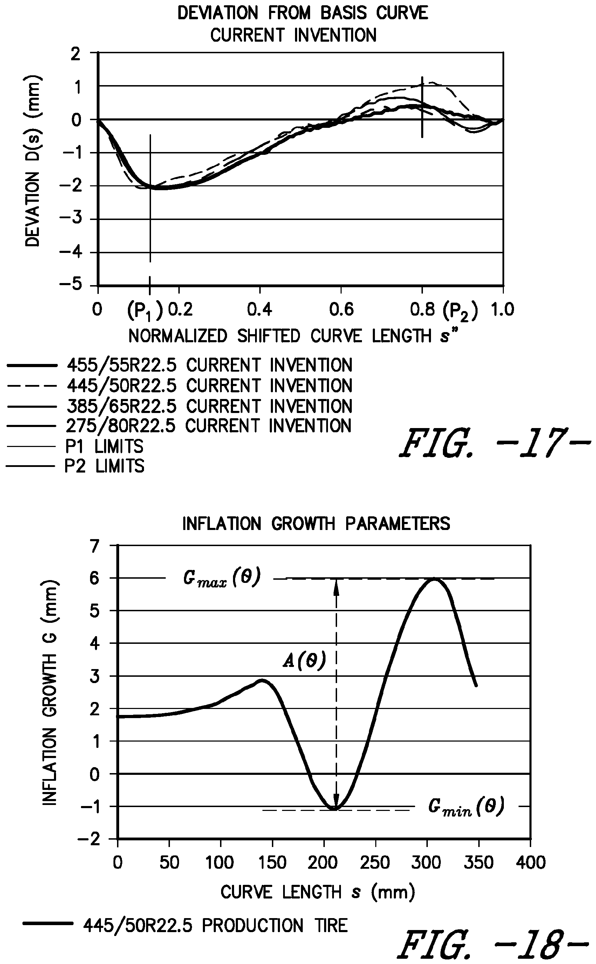

FIG. 16 illustrates a plot of deviation $D(s'')$ for the four conventional tires previously referenced in FIGS. 10, 13, and 14. As shown, the body ply of these four conventional tires falls outside the specified ranges of deviation $D$ for $P_1$ and $P_2$. FIG. 17 shows the same tire sizes constructed with the inventive body ply H. The deviation $D(s'')$ falls well within the specified ranges for deviation $D$ at $P_1$ and $P_2$.

By constructing a tire within an inventive body ply H having deviation D as specified, uniform inflation growth $G$ from bead portion 102 to bead portion 104 is obtained. For obtaining the benefits of the invention, the magnitude of inflation growth $G$ is not critical. Instead, the absence of peaks and valleys is important. Recalling that the value of the distance parameter at point t is $s_t$ as set forth above, the maximum, minimum, and amplitude of inflation growth $G$ over the region from $- s_t$ to $s_t$ at a given azimuthal angle $\theta$ is defined as follows:

Equation 6

$$G_{max}(\theta) = \max_{s \in [-s_t, s_t]} G(s, \theta)$$

Equation 7

$$G_{min}(\theta) = \min_{s \in [-s_t, s_t]} G(s, \theta)$$

Equation 8

$$A(\theta) = G_{max}(\theta) - G_{min}(\theta)$$

$G_{max}(\theta)$ is the maximum inflation growth $G$ found between parameter points - $s_t$ and $s_t$ at a given angle $\theta$. Similarly, $G_{min}(\theta)$ is the minimum inflation growth found between parameter points -$s_t$ and $s_t$ at a given angle $\theta$. $A(\theta)$ is the amplitude of the inflation growth at angle $\theta$ and is the difference between $G_{max}(\theta)$ and $G_{min}(\theta)$. This is illustrated in FIG. 18 using the conventional tire from FIG. 5 by way of example.

Finite element calculations of inflation growth $G$ are typically 2d axisymmetric simulations, predicting the same amplitude $A$ at all azimuthal angles $\theta$. For physical tire measurements, however, inflation growth $G$ can vary from azimuth to azimuth around the tire. Accordingly, as used in the claims that follow, the final amplitude measurement is defined herein as an average of $n \geq 4$ evenly spaced azimuthal measurements in the following fashion:

Equation 9

$$A \equiv \frac{1}{n} \sum_{i=0}^{n-1} A\left(\theta = \frac{360°}{n} i\right)$$

Using equations 6, 7, and 9, the following results were calculated using the four conventional tires previously referenced as well as tires of the same size equipped with a body ply H of the present invention:

TABLE I

| | 455/45R22.5 Production Tire | 455/45R22.5 Current Invention | 445/50R22.5 Production Tire | 445/50R22.5 Current Invention | 385/60R22.5 Production Tire | 385/60R22.5 Current Invention | 275/80R22.5 Production Tire | 275/80R22.5 Current Invention |
|---|---|---|---|---|---|---|---|---|
| Gmax | 8.4 | 2.4 | 5.9 | 2.3 | 3.8 | 2.7 | 4.3 | 2.2 |
| Gmin | -2.3 | 1.5 | -1.1 | 1.5 | 0.0 | 1.4 | 0.0 | 0.9 |
| A | 10.7 | 0.9 | 7.0 | 0.8 | 3.8 | 1.3 | 4.3 | 1.3 |

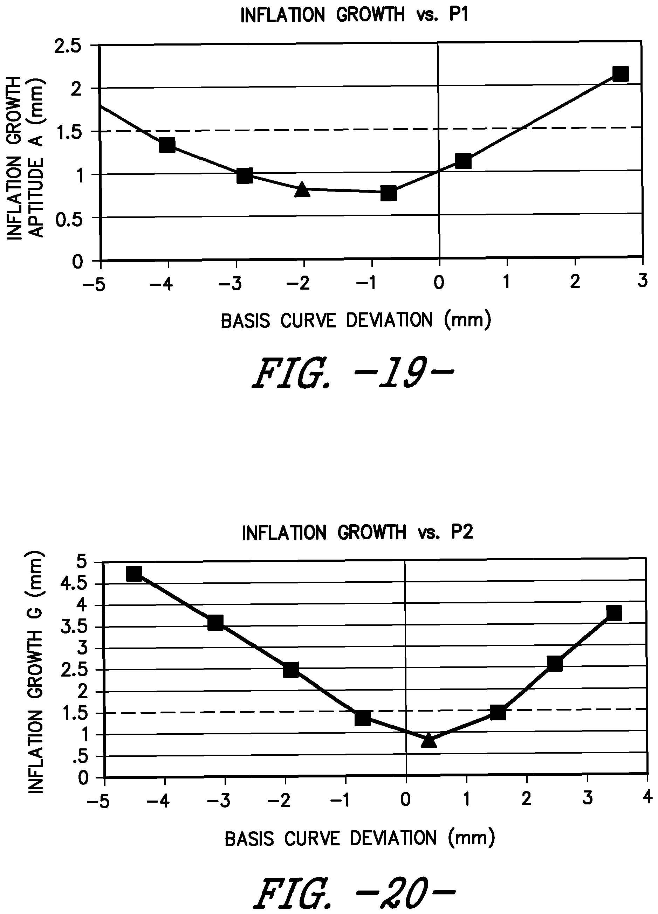

In one exemplary embodiment of the invention, when constructed with such a body ply H, tire 100 has an inflation growth amplitude *A* that is less than, or equal to, about 1.5 mm when the tire is inflated from a pressure of about 0.5 bar to about the maximum sidewall pressure. FIGS. 19 and 20 provide plots of $P_1$ and $P_2$ as function of deviation from the basis curve in units of millimeters (mm). As shown, the inflation growth amplitude *A* is less than, or equal to, about 1.5 mm when the deviation *D(s)* from the basis curve BC at point $P_1$ is maintained within the range of - 4.25 mm $\leq D(s) \leq$ - 0.5 mm and the deviation *D(s)* from the basis curve BC at point $P_2$ is maintained within the range of - 0.5 mm $\leq D(s) \leq$ 1.25 mm.

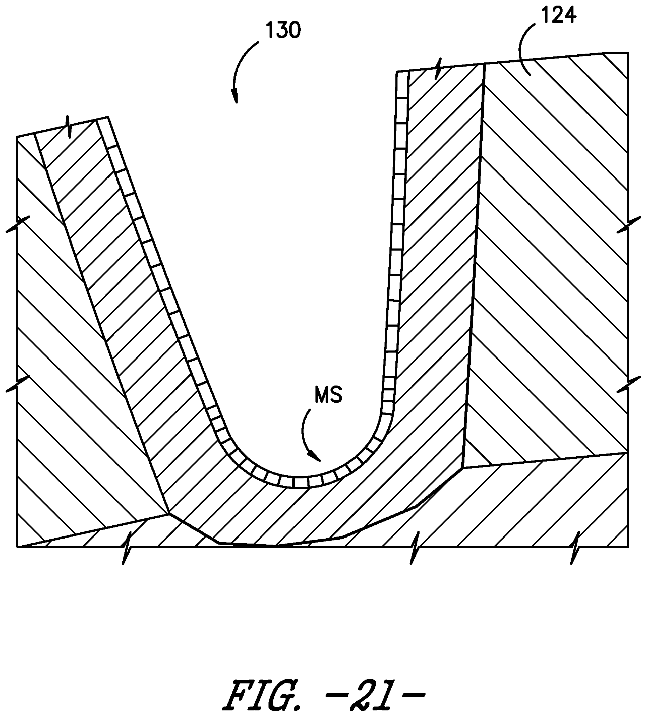

The efficacy of the new invention was also demonstrated by a shoulder groove cracking simulation performed using the same four tire sizes. Specially prepared FEA models were generated for this purpose in which the mesh density was drastically increased along the shoulder groove bottoms (Fig. 10). A rolling simulation on flat ground was carried out with the tire pressure at 8.3 bar and the load at 3680 kilograms. The P1 (first principal) Cauchy stress for each element is calculated in the shoulder grooves at each azimuth as the tire makes a rotation and the maximum P1 stress is extracted for the rolling cycle. FIG. 21 shows the location where the maximum stress MS occurred and Table II provides the results. As will be understood by one of skill in the art, Cauchy stress is widely used as an indicator for groove bottom cracking. In Tables I and Table II as well as the figures, "production tire" refers to a conventional tire constructed without the inventive body ply while "current invention" refers to an exemplary embodiment of a tire constructed with an inventive body ply H of the present invention.

**TABLE II**

| | 455/45R22.5 Production Tire | 455/45R22.5 Current Invention | 445/50R22.5 Production Tire | 445/50R22.5 Current Invention | 385/65R22.5 Production Tire | 385/65R22.5 Current Invention | 275/80R22.5 Production Tire | 275/80R22.5 Current Invention |
|---|---|---|---|---|---|---|---|---|
| Max P1 | 8.6 | 0.3 | 7.0 | 0.3 | 5.0 | 0.5 | 2.6 | 0.1 |

The present invention also provides for an exemplary method of designing or constructing tire 100. Such method could be used to improve the body ply for an existing tire design or could be used in creating a new tire design. In either case, for this exemplary method, the designer would begin by creating a model of the tire that includes a reference curve representing the shape of the body ply along a meridian plane when the tire is inflated to a reference pressure, wherein $s$ is a length in mm along the reference curve from a centerline of the tire. For an existing tire, the reference curve could be created as described above using existing CAD drawings or by using physical measurements of a specimen of the tire subjected, e.g., X-ray, laser profilometry, or other techniques. For a new tire design, the reference curve could be created from e.g., CAD models or other computer models of the tire. The reference pressure could be e.g., 0.5 bar or other pressures.

Next, a basis curve BC is constructed for the tire based upon the reference curve of the tire at the reference pressure. The basis curve BC is constructed e.g., as previously described.

Using the basis curve BC, a target reference curve (which can be described by $R(s)$ as set forth above via equations 4 and 5) is created for the shape of the body ply along the meridian plane. This target reference curve is the desired curve or geometry for the new body ply - such as e.g., the exemplary body ply H discussed above - to be used in the tire.

The target reference curve is created by repositioning the reference curve to have a deviation $D(s)$ from the basis curve BC that is in the range of $-4.25$ mm $\leq D(s) \leq -0.5$ mm at point $P_1$ and in the range of $-0.5$ mm $\leq D(s) \leq 1.25$ mm at a point $P_2$, where $P_1$ and $P_2$ are located along the target reference curve as set forth in equations 4 and 5 above, respectively.

The target reference curve could be created by repositioning the reference curve on one or both sides of the tire centerline as well.

For an existing tire, the design would be changed to include the new shape of the body ply. This would include changes to manufacture the tire having the new body ply. For a newly designed tire, the design would include the new profile or curve for the body ply. Accordingly, the present invention includes tires constructed and manufactured having the new inventive body ply providing for uniform inflation growth $G$ as described herein.

Certain tires are used to travel at highway speeds on relatively long trips. With improvements in wear performance and retreading of e.g., truck tires having an aspect ratio greater than 0.5, it can become important for the crown portion of the tire to also have good endurance. For example, the crown portion can experience shearing stresses between the shear layers. When coupled with a significant increase in temperature near the ends of certain layers in the crown during tire operation, it is possible for cracks to appear and propagate in the tire rubber located near such ends.

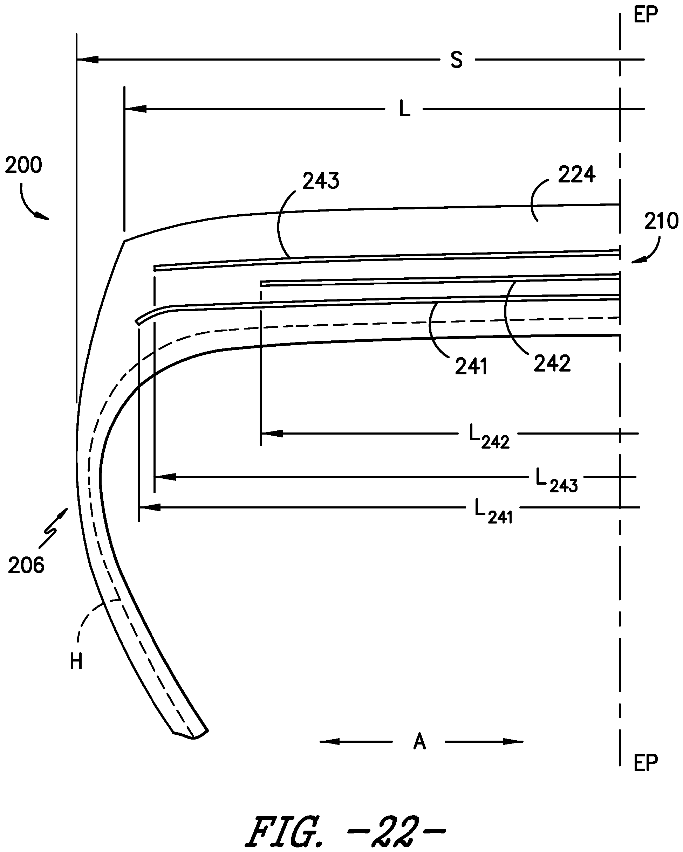

FIG. 22 provides another exemplary embodiment of a tire 200 of the present invention having an exemplary inventive body ply H constructed as previously described. For this embodiment, tire 200 has an aspect ratio of 50 or greater, where the aspect ratio is as defined by the Tire and Rim Association. In a manner similar to FIG. 1, exemplary body ply H is anchored in a pair of opposing bead portions (not shown) and passes through opposing sidewall portions (only one sidewall portion 206 is shown in FIG. 22) connected by a crown portion 210. Body ply H can be formed of a single layer of reinforcement elements such as e.g., metal cables. Alternatively, two or more layers can be used. In crown portion 210, body ply H is wrapped along the circumferential direction by several reinforcing layers (e.g., 241, 242, and 243) as will be described. A tread portion 224 is located radially outward of, and wrapped around, the reinforcing layers.

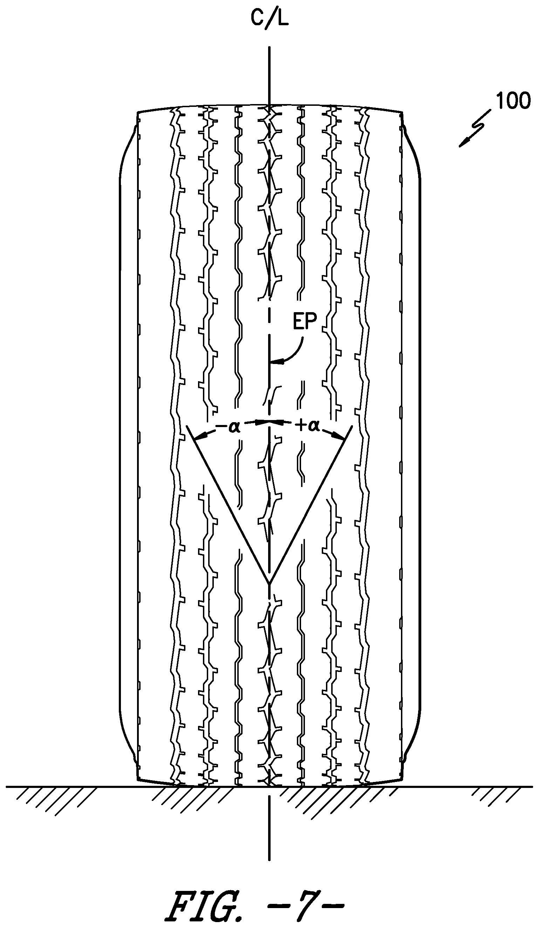

For this exemplary embodiment, tire 200 includes at least two belt plies 241 and 243 positioned in crown portion 210. Belt plies 241 and 243 each include belt ply reinforcement elements that are formed of non-wrapped elements such as e.g., metal cables that, for each belt ply, are continuous over the entire axial width of belt ply 241 and 243, respectively. These cables may form a positive or negative angle $\pm \alpha$ (see FIG. 7) having an absolute value in the range of 10° (degrees) to 45° from the equatorial plane EP of tire 200 in one embodiment, or having an absolute value of 18° from the equatorial plane EP in another embodiment. In one exemplary embodiment, the cables of the respective belt plies 241 and 243 are crossed (i.e. $+ \alpha$ and $- \alpha$) with respect to one another. For example, in one embodiment, each cable can be constructed from 9 wires having a diameter of about 0.26 mm each. The cables may be positioned in the one or more rubber materials of belt ply 241 at a pace of 2.25 mm, where pace is the distance between the cable centerlines measured along a direction perpendicular to the cables. By way of example, each belt ply 241 and 243 may have a thickness, including the rubber materials and cables, of about 1.88 mm. Alternatively, by way of further example, the belt plys may be constructed from 7 wires having a diameter of about 0.26 mm each. The cables may be positioned in the one or more rubber materials of belt ply 241 at a pace of about 2.1 mm.

Belt ply 241, for this exemplary embodiment, has an axial width $L_{241}$ that can be equal to 183 mm while belt ply 243 can have an axial width $L_{243}$ of 172 mm. In another exemplary embodiment, belt plies 241 and 243 have a difference in axial width that is between 10 mm and 30 mm. As used herein, the axial width of a belt ply is measured along the axial direction A in a meridian plane of the tire (as used e.g., in FIGS. 1, 22, and 23) in its non-inflated state.

Tire 200 includes a circumferential layer 242 that includes circumferential reinforcement elements that may be continuous or variable over the entire axial width of circumferential layer 242. As used herein, circumferential reinforcement elements are reinforcement elements that form an angle $\alpha$ of about 0° from the equatorial plane EP (see FIG. 7) or an angle $\alpha$ in the range $-5° \leq \alpha \leq +5°$. In one exemplary embodiment, the circumferential reinforcement elements are inextensible metal cables constructed from 21 wires having a diameter of about 0.23 mm each. Such circumferential reinforcement elements may be positioned within one or more rubber materials at a pace of 1.55 mm. By way of example, circumferential layer 242 may have a thickness, including the rubber materials and cables, of about 1.2 mm. For this exemplary embodiment, circumferential layer 242 is shown radially adjacent to, and between, belt plies 241 and 243. In other exemplary embodiments, circumferential layer 242 may be located radially outward of belt ply 243 or radially inward of belt ply 241. For the embodiment shown in FIG. 22, circumferential layer 242 may have an axial width $L_{242}$ of 147 mm.

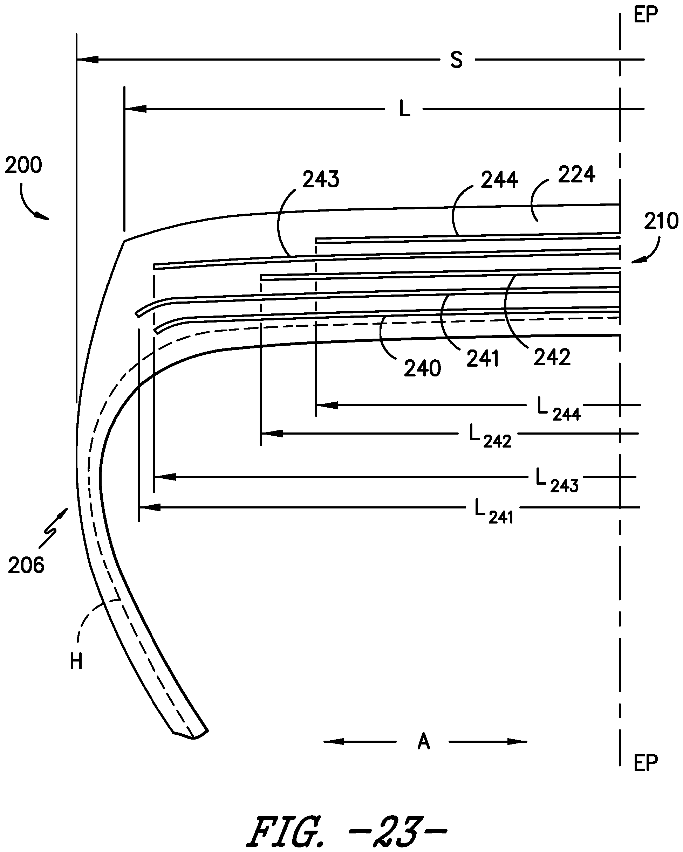

FIG. 23 illustrates another exemplary embodiment of tire 200 where the same reference numerals denote same or similar features to the exemplary embodiment of FIG. 22. Exemplary tire 200 in FIG. 23 includes the elements of FIG. 22 as well as two additional layers 240 and 244. More particularly, for this exemplary embodiment, tire 200 is shown with an optional protective layer 244 that is located radially outward of circumferential layer 242 and radially adjacent to at least one of the belt plies 241 or 243 - in this case belt ply 243. Protective layer 244 includes elastic or inelastic reinforcement elements or elastic or inelastic cables. The reinforcement elements are oriented at an angle $\pm \alpha$ with respect to the equatorial plane having an absolute value in the range of 10° (degrees) to 45° from the equatorial plane EP of tire 200 in one embodiment, or of 18 degrees from the equatorial plane EP in another embodiment. In still another embodiment, the reinforcement elements of protective layer 244 are at the same angle $\alpha$ as the belt ply to which layer 244 is radially adjacent - in this case belt ply 243. In one exemplary embodiment, the reinforcement elements of protective layer 244 are metal cables constructed from 8 wires having a diameter of about 0.35 mm each. Such reinforcement elements may be positioned within one or more rubber materials at a pace of 3.15 mm. By way of example, protective layer 244 may have a thickness, including the rubber materials and cables, of about 1.7 mm. Alternatively, for example, the reinforcement elements of protective layer 244 may be metal cables constructed from 7 wires having a diameter of about 0.26 mm each. For the embodiment shown in FIG. 23, protective layer 244 may have an axial width $L_{244}$ of 154 mm. It should be understood that tire 200 may be provided without protective layer 244.

In addition, tire 200 of FIG. 23 also includes a supplemental layer 240 that is positioned radially outward of body ply H and radially inward of the other layers 241, 242, 243, and 244. Supplemental layer 240 can have an axial width that is substantially equal to $L_{243}$, i.e. the axial width of belt ply 243. Alternatively, supplemental layer 240 can have a different width from belt ply 243. For example, in one exemplary embodiment, $L_{243}$ is 172 mm while $L_{240}$ is 160 mm. In another embodiment its width is 75 mm. Supplemental layer 240 may include supplemental reinforcement elements constructed from e.g., metal cables that form an angle $\alpha$ (see FIG. 7) of 90° from the equatorial plane EP of tire 200. In another embodiment, supplemental layer 240 may have an angle in the range of 40 degrees to 60 degrees. Other angles may be used as well. In one exemplary embodiment, the cables of the supplemental layer 240 can be constructed from 9 wires having a diameter of about 0.26 mm each. The cables may be positioned in the one or more rubber materials of belt ply 241 at a pace of 1.8 mm. By way of example, supplemental layer 240 may have a thickness, including the rubber materials and cables, of about 1.7 mm. Alternatively, for example, the reinforcement elements of protective layer 244 may be metal cables constructed from 7 wires having a diameter of about 0.26 mm each.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

**Claims**

1.    A tire (100, 200) defining a radial direction, an axial direction, and a tire centerline (C/L), the tire (100, 200) comprising:

a pair of opposing bead portions (102, 104);
a pair of opposing sidewall portions (106, 108, 206) connected with the opposing bead portions (102, 104);
a crown portion (110, 210) connecting the opposing sidewall portions (106, 108, 206);
at least one body ply (H) extending between the bead portions (102, 104) and through the sidewall (106, 108, 206) and crown (110, 210) portions, the body ply (H) having a curve along a meridian plane, wherein s is the length in mm along the curve from the centerline (C/L) of the tire (100, 200); and
at least two belt plies (112, 114, 116, 241, 243) positioned in the crown portion (110, 210), each belt ply (112, 114, 116, 241, 243) comprising belt ply reinforcement elements that are crossed with respect from one belt ply (112, 114, 116, 241, 243) to the other belt ply (112, 114, 116, 241, 243), the reinforcement elements forming

an angle $\pm \alpha$ with respect to an equatorial plane (EP) of the tire (100, 200) having an absolute value of between 10° and 45°, wherein $s_M$ is one-half of the maximum curvilinear width, along the axial direction, of the widest belt ply (W) in the meridian plane of the at least two belt plies (112, 114, 116, 241, 243);

**characterized by**

a circumferential layer (242) comprising circumferential reinforcement elements and having a width along the axial direction; and

wherein when a basis curve (BC) having three points of tangency p, d, and q as defined in paragraphs [0061] through [0075] of the description is constructed for the body ply (H), along at least one side of the tire centerline (C/L) the body ply (H) has

i) a deviation $D(s)$ from the basis curve (BC) in the range of - 4.25 mm $\leq D(s) \leq$ 0.5 mm at a point $P_1 = 0.13s_q + 0.87\ s_M$ - 56.6 mm, and

ii) a deviation $D(s)$ from the basis curve in the range of - 0.5 mm $\leq D(s) \leq$ 1.25 mm at a point $P_2 = 0.8s_q + 0.2\ s_M$ - 13 mm;

where $s_q$ is the length along the curve of the basis curve (BC) at which point q occurs.

2. The tire (100, 200) of claim 1, further comprising:

a protective layer (244) located radially outward of the circumferential layer (242) and radially adjacent to one of the at least two belt plies (112, 114, 116, 241, 243), wherein the protective layer (244) comprises reinforcement elements oriented at angle with respect to the equatorial plane of between 10 degrees and 45 degrees and at the same angle as the body ply reinforcement elements of the body ply (H) to which the protective layer (244) is radially adjacent.

3. The tire (100, 200) of claim 1, further comprising:

a supplemental layer (240) located radially outward of the body ply (H) and radially inward of all the belt plies (112, 114, 116, 241, 243), the supplemental layer (240) comprising supplemental layer reinforcement elements.

4. The tire (100, 200) of claim 3, wherein the supplemental layer reinforcement elements have an angle in the range of 40 degrees to 60 degrees with respect to the equatorial plane.

5. The tire (100, 200) of claim 1, wherein the circumferential layer (242) is positioned radially adjacent to, and located between, the at least two belt plies (112, 114, 116, 241, 243).

6. The tire (100, 200) of claim 1, wherein in the meridian plane the circumferential layer (242) is wider along the axial direction than the at least two belt plies (112, 114, 116, 241, 243).

7. The tire (100, 200) of claim 1, wherein the belt ply reinforcement elements of the at least two belt plies (112, 114, 116, 241, 243) form an angle with respect to an equatorial plane of the tire (100, 200) of 18°.

8. The tire (100, 200) of claim 1, wherein the difference in width along the axial direction of the at least two belt plies (112, 114, 116, 241, 243) is between 10 mm and 30 mm.

9. The tire (100, 200) of claim 1, wherein the tire (100, 200) has a maximum sidewall pressure, and wherein the tire (100, 200) has an inflation growth amplitude A as defined in paragraphs [0099] through [00119] of the description that is less, or equal to, about 1.5 mm when the tire (100, 200) is inflated from a pressure of about 0.5 bar to about the maximum sidewall pressure.

10. The tire (100, 200) of claim 1, wherein when the basis curve (BC) having three points of tangency p, d, and q as defined in paragraphs [0061] to [0075] of the description is constructed from the body ply (H), along both sides of the tire centerline (C/L) the body ply (H) has

i) a deviation $D(s)$ from the basis curve (BC) in the range of - 4.25 mm $\leq D(s) \leq$ 0.5 mm at a point $P_1 = 0.13s_q + 0.87\ s_M$ - 56.6 mm, and

ii) a deviation $D(s)$ from the basis curve (BC) in the range of - 0.5 mm $\leq D(s) \leq$ 1.25 mm at a point $P_2 = 0.8s_q + 0.2\ s_M$ -13 mm.

where $s_q$ is the length along the curve of the basis curve (BC) at which point q occurs.

11. The tire (100, 200) of claim 1, wherein the basis curve (BC) is constructed at a reference pressure of 0.5 bar.

12. The tire (100, 200) of claim 1, wherein the at least one body ply (H) comprises a plurality of reinforcements forming an angle of 80 degrees or more from an equatorial plane of the tire (100, 200) along the crown portion (110, 210).

13. The tire (100, 200) of claim 1, wherein the tire (100, 200) has an aspect ratio in the range of 50 to 80.

14. The tire (100, 200) of claim 13, wherein the tire (100, 200) has a section width in the range of 275 mm to 455 mm.

15. The tire (100, 200) of claim 14, wherein the tire (100, 200) has a section width in the range of 445 mm to 455 mm.


**Patentansprüche**

1. Reifen (100, 200), der eine radiale Richtung, eine axiale Richtung und eine Reifenmittellinie (C/L) definiert, wobei der Reifen (100, 200) Folgendes umfasst:

zwei gegenüberliegende Wulstabschnitte (102, 104);
zwei gegenüberliegende Seitenwandabschnitte (106, 108, 206), die mit den gegenüberliegenden Wulstabschnitten (102, 104) in Verbindung stehen;
einen Kronenabschnitt (110, 210), der die gegenüberliegenden Seitenwandabschnitte (106, 108, 206) verbindet;
mindestens eine Karkassenlage (H), die sich zwischen den Wulstabschnitten (102, 104) und durch die Seitenwandabschnitte (106, 108, 206) und den Kronenabschnitt (110, 210) erstreckt, wobei die Karkassenlage (H) eine Krümmung längs einer Meridianebene besitzt, wobei s die Länge in mm entlang der Krümmung ausgehend von der Mittellinie (C/L) des Reifens (100, 200) ist; und
mindestens zwei Gürtellagen (112, 114, 116, 241, 243), die in dem Kronenabschnitt (110, 210) positioniert sind, wobei jede Gürtellage (112, 114, 116, 241, 243) Gürtellagenverstärkungselemente umfasst, die sich von einer Gürtellage (112, 114, 116, 241, 243) zu der anderen Gürtellage (112, 114, 116, 241, 243) kreuzen, wobei die Verstärkungselemente einen Winkel $\pm \alpha$ zu einer Äquatorialebene (EP) des Reifens (100, 200) mit einem Absolutwert von zwischen 10° und 45° bilden, wobei $s_M$ die Hälfte der maximalen krummlinigen Breite, entlang der axialen Richtung, der breitesten Gürtellage (W) in der Meridianebene der mindestens zwei Gürtellagen (112, 114, 116, 241, 243) darstellt;
**gekennzeichnet durch**
eine umlaufende Schicht (242), die umlaufende Verstärkungselemente umfasst und eine Breite entlang der axialen Richtung besitzt; und
wobei dann, wenn eine Basiskrümmung (BC) mit drei Tangentialpunkten p, d und q gemäß der Definition in den Absätzen [0061] bis [0075] der Beschreibung für die Karkassenlage (H) entlang mindestens einer Seite der Reifenmittellinie (C/L) konstruiert ist, die Karkassenlage (H) Folgendes besitzt:

i) eine Abweichung D(s) von der Basiskrümmung (BC) im Bereich von -4,25 mm $\leq$ D(s) $\leq$ 0,5 mm an einem Punkt $P_1 = 0{,}13\ s_q + 0{,}87\ s_M$ - 56,6 mm, und
ii) eine Abweichung D(s) von der Basiskrümmung im Bereich von -0,5 mm $\leq$ D(s) $\leq$ 1,25 mm an einem Punkt $P_2 = 0{,}8\ s_q + 0{,}2\ s_M$ - 13 mm;

wobei $s_q$ die Länge entlang des Verlaufs der Basiskrümmung (BC) ist, wo der Punkt q erscheint.

2. Reifen (100, 200) nach Anspruch 1, ferner umfassend:

eine Schutzschicht (244), die sich radial auswärts von der umlaufenden Schicht (242) und radial angrenzend an eine der mindestens zwei Gürtellagen (112, 114, 116, 241, 243) befindet, wobei die Schutzschicht (244) Verstärkungselemente umfasst, die in einem Winkel zu der Äquatorialebene von zwischen 10 Grad und 45 Grad und in demselben Winkel wie die Karkassenlagenverstärkungselemente der Karkassenlage (H) ausgerichtet sind, an die die Schutzschicht (244) radial angrenzt.

3. Reifen (100, 200) nach Anspruch 1, ferner umfassend:

eine zusätzliche Schicht (240), die sich radial auswärts von der Karkassenlage (H) und radial einwärts von allen Gürtellagen (112, 114, 116, 241, 243) befindet, wobei die zusätzliche Schicht (240) Verstärkungselemente für die zusätzliche Schicht umfasst.

4. Reifen (100, 200) nach Anspruch 3, wobei die Verstärkungselemente für die zusätzliche Schicht einen Winkel im Bereich von 40 Grad bis 60 Grad zu der Äquatorialebene besitzen.

5. Reifen (100, 200) nach Anspruch 1, wobei die umlaufende Schicht (242) radial angrenzend an und zwischen den mindestens zwei Gürtellagen (112, 114, 116, 241, 243) positioniert ist.

6. Reifen (100, 200) nach Anspruch 1, wobei in der Meridianebene die umlaufende Schicht (242) entlang der axialen Richtung breiter ist als die mindestens zwei Gürtellagen (112, 114, 116, 241, 243).

7. Reifen (100, 200) nach Anspruch 1, wobei die Gürtellagenverstärkungselemente der mindestens zwei Gürtellagen (112, 114, 116, 241, 243) einen Winkel mit einer Äquatorialebene des Reifens (100, 200) von 18° bilden.

8. Reifen (100, 200) nach Anspruch 1, wobei der Unterschied in der Breite entlang der axialen Richtung der mindestens zwei Gürtellagen (112, 114, 116, 241, 243) zwischen 10 mm und 30 mm beträgt.

9. Reifen (100, 200) nach Anspruch 1, wobei der Reifen (100, 200) einen maximalen Seitenwanddruck besitzt und wobei der Reifen (100, 200) eine in den Absätzen [0099] bis [00119] der Beschreibung definierte Wachstumsamplitude A beim Aufblasen von kleiner oder gleich etwa 1,5 mm besitzt, wenn der Reifen (100, 200) von einem Druck von etwa 0,5 bar auf etwa den maximalen Seitenwanddruck aufgeblasen wird.

10. Reifen (100, 200) nach Anspruch 1, wobei dann, wenn die Basiskrümmung (BC) mit drei Tangentialpunkten p, d und q gemäß der Definition in den Absätzen [0061] bis [0075] der Beschreibung aus der Karkassenlage (H) konstruiert ist, die Karkassenlage (H) entlang beider Seiten der Mittellinie (C/L) Folgendes besitzt:

i) eine Abweichung D(s) von der Basiskrümmung (BC) im Bereich von -4,25 mm $\leq$ D(s) $\leq$ 0,5 mm an einem Punkt $P_1 = 0,13\ s_q + 0,87\ s_M$ - 56,6 mm, und
ii) eine Abweichung D(s) von der Basiskrümmung (BC) im Bereich von -0,5 mm $\leq$ D(s) $\leq$ 1,25 mm an einem Punkt $P_2 = 0,8\ s_q + 0,2\ s_M$ - 13 mm;

wobei $s_q$ die Länge entlang des Verlaufs der Basiskrümmung (BC) ist, wo der Punkt q erscheint.

11. Reifen (100, 200) nach Anspruch 1, wobei die Basiskrümmung (BC) bei einem Referenzdruck von 0,5 bar konstruiert ist.

12. Reifen (100, 200) nach Anspruch 1, wobei die mindestens eine Karkassenlage (H) eine Vielzahl von Verstärkungen umfasst, die einen Winkel von 80 Grad oder mehr von einer Äquatorialebene des Reifens (100, 200) entlang des Kronenabschnitts (110, 210) bilden.

13. Reifen (100, 200) nach Anspruch 1, wobei der Reifen (100, 200) ein Seitenverhältnis im Bereich von 50 bis 80 besitzt.

14. Reifen (100, 200) nach Anspruch 13, wobei der Reifen (100, 200) eine Schnittbreite im Bereich von 275 mm bis 455 mm besitzt.

15. Reifen (100, 200) nach Anspruch 14, wobei der Reifen (100, 200) eine Schnittbreite im Bereich von 445 mm bis 455 mm besitzt.

## Revendications

1. Pneu (100, 200) définissant une direction radiale, une direction axiale, et une ligne centrale de pneu (C/L), le pneu (100, 200) comprenant :

une paire de parties de talon (102, 104) opposées;
une paire de parties de flanc (106, 108, 206) opposées reliées aux parties de talon (102, 104) opposées ;

une partie de sommet (110, 210) reliant les parties de flanc (106, 108, 206) opposées ;

au moins une nappe carcasse (H) s'étendant entre les parties de talon (102, 104) et à travers les parties de flanc (106, 108, 206) et de sommet (110, 210), la nappe carcasse (H) ayant une courbure le long d'un plan méridien, dans lequel $S$ est la longueur en mm suivant la courbure depuis la ligne centrale (C/L) du pneu (100, 200) ; et

au moins deux nappes de ceinture (112, 114, 116, 241, 243) positionnées dans la partie de sommet (110, 210), chaque nappe de ceinture (112, 114, 116, 241, 243) comprenant des éléments de renforcement de nappe de ceinture qui sont croisés d'une nappe de ceinture (112, 114, 116, 241, 243) à l'autre nappe de ceinture (112, 114, 116, 241, 243), les éléments de renforcement formant un angle $\pm\alpha$ par rapport à un plan équatorial (EP) du pneu (100, 200) ayant une valeur absolue d'entre 10° et 45°, dans lequel $S_M$ est une moitié de la largeur curviligne maximale, le long de la direction axiale, de la nappe de ceinture la plus large (W) dans le plan méridien des au moins deux nappes de ceinture (112, 114, 116, 241, 243) ;

**caractérisé par**

une couche circonférentielle (242) comprenant des éléments de renforcement circonférentiels et ayant une largeur le long de la direction axiale ; et

dans lequel quand une courbe de base (BC) ayant trois points de tangence p, d, et q comme défini dans les paragraphes [0061] à [0075] de la description est construite pour la nappe carcasse (H), le long d'au moins un côté de la ligne centrale (C/L) la nappe carcasse (H) a

 i) une déviation $D(s)$ de la courbe de base (BC) dans la plage de -4,25 mm $\leq D(s) \leq$ 0,5 mm en un point P$_1$ = 0,13$Sq$ + 0,87$S_M$ - 56,6 mm, et

 ii) une déviation $D(s)$ de la courbe de base dans la plage de -0,5 mm $\leq D(s) \leq$ 1,25 mm en un point P$_2$ = $0,8Sq$ + 0,2$S_M$ - 13 mm ;

où $Sq$ est la longueur le long de la courbe de la courbe de base (BC) en laquelle le point q apparait.

2. Pneu (100, 200) selon la revendication 1, comprenant en outre :

une couche protectrice (244) située radialement à l'extérieur de la couche circonférentielle (242) et radialement adjacente à une des au moins deux nappes de ceinture (112, 114, 116, 241, 243), dans lequel la couche protectrice (244) comprend des éléments de renforcement orientés à un angle par rapport au plan équatorial d'entre 10 degrés et 45 degrés et au même angle que les éléments de renforcement de nappe carcasse de la nappe carcasse (H) à laquelle la couche protectrice (244) est radialement adjacente.

3. Pneu (100, 200) selon la revendication 1, comprenant en outre :

une couche supplémentaire (240) située radialement à l'extérieur de la nappe carcasse (H) et radialement à l'intérieur de toutes les nappes de ceinture (112, 114, 116, 241, 243), la couche supplémentaire (240) comprenant des éléments de renforcement de couche supplémentaire.

4. Pneu (100, 200) selon la revendication 3, dans lequel les éléments de renforcement de couche supplémentaire ont un angle dans la plage de 40 degrés à 60 degrés par rapport au plan équatorial.

5. Pneu (100, 200) selon la revendication 1, dans lequel la couche circonférentielle (242) est positionnée radialement adjacente à, et située entre, les au moins deux nappes de ceinture (112, 114, 116, 241, 243).

6. Pneu (100, 200) selon la revendication 1, dans lequel dans le plan méridien la couche circonférentielle (242) est plus large le long de la direction axiale que les au moins deux nappes de ceinture (112, 114, 116, 241, 243).

7. Pneu (100, 200) selon la revendication 1, dans lequel les éléments de renforcement de nappe de ceinture des au moins deux nappes de ceinture (112, 114, 116, 241, 243) forment un angle par rapport à un plan équatorial du pneu (100, 200) de 18°.

8. Pneu (100, 200) selon la revendication 1, dans lequel la différence de largeur le long de la direction axiale des au moins deux nappes de ceinture (112, 114, 116, 241, 243) est entre 10 mm et 30 mm.

9. Pneu (100, 200) selon la revendication 1, dans lequel le pneu (100, 200) a une pression de flanc maximale, et dans lequel le pneu (100, 200) a une amplitude de croissance de gonflage $A$ comme définie dans les paragraphes [0099] à [00119] de la description qui est inférieure ou égale à environ 1,5 mm quand le pneu (100, 200) est gonflé d'une pression d'environ 0,5 bar à environ la pression de flanc maximale.

10. Pneu (100, 200) selon la revendication 1, dans lequel quand la courbe de base (BC) ayant trois points de tangence p, d, et q comme défini dans les paragraphes [0061] à [0075] de la description est construite à partir de la nappe carcasse (H), le long des deux côtés de la ligne centrale (C/L) la nappe carcasse (H) a

   i) une déviation $D(s)$ de la courbe de base dans la plage de -4,25 mm $\leq D(s) \leq$ 0,5 mm en un point $P_1$ = 0,13$Sq$ + 0,87$S_M$ - 56,6 mm, et
   ii) une déviation $D(s)$ de la courbe de base dans la plage de -0,5 mm $\leq D(s) \leq$ 1,25 mm en un point $P_2$ = 0,8$Sq$ + 0,2$S_M$ - 13 mm ;

   où Sq est la longueur le long de la courbe de la courbe de base (BC) en laquelle le point q apparait.

11. Pneu (100, 200) selon la revendication 1, dans lequel la courbe de base (BC) est construite à une pression de référence de 0,5 bar.

12. Pneu (100, 200) selon la revendication 1, dans lequel l'au moins une nappe carcasse (H) comprend une pluralité de renforcements formant un angle de 80 degrés ou plus depuis un plan équatorial du pneu (100, 200) le long de la partie de sommet (110, 210).

13. Pneu (100, 200) selon la revendication 1, dans lequel le pneu (100, 200) a un rapport d'aspect dans la plage de 50 à 80.

14. Pneu (100, 200) selon la revendication 13, dans lequel le pneu (100, 200) a une largeur de section dans la plage de 275 mm à 455 mm.

15. Pneu (100, 200) selon la revendication 14, dans lequel le pneu (100, 200) a une largeur de section dans la plage de 445 mm à 455 mm.

FIG. -1-

EP 3 212 441 B1

$s = 0$

$\vec{n}_R$

R

$\vec{t}_R$

$\vec{R}(s_0)$

r

y

$s = L$

A

FIG. -2-

FIG. -3-

**FIG. -4-**

**CARCASSE INFLATION GROWTH**

FIG. -5-

*FIG. -6-*

C/L

100

EP

−α    +α

*FIG. −7−*

BC

H

*FIG. -8-*

## DEVIATION FROM BASIS CURVE

445/50R22.5 PRODUCTION TIRE (N)
‑‑‑ 445/50R22.5 CURRENT INVENTION (H)

*FIG. ‑9‑*

## DEVIATION FROM BASIS CURVE
### PRODUCTION TIRE

455/55R22.5 PRODUCTION TIRE
‑‑‑ 445/50R22.5 PRODUCTION TIRE
385/65R22.5 PRODUCTION TIRE
275/80R22.5 PRODUCTION TIRE

*FIG. ‑10‑*

## DEVIATION FROM BASIS CURVE
## CURRENT INVENTION

FIG. -11-

——— 455/55R22.5 CURRENT INVENTION
– – – 445/50R22.5 CURRENT INVENTION
——— 385/65R22.5 CURRENT INVENTION
——— 275/80R22.5 CURRENT INVENTION

## DEVIATION FROM BASIS CURVE
## CURRENT INVENTION

FIG. -12-

——— 455/55R22.5 CURRENT INVENTION
– – – 445/50R22.5 CURRENT INVENTION
——— 385/65R22.5 CURRENT INVENTION
——— 275/80R22.5 CURRENT INVENTION

## DEVIATION FROM BASIS CURVE
### PRODUCTION TIRE

——— 455/55R22.5 PRODUCTION TIRE
– – – 445/50R22.5 PRODUCTION TIRE
——— 385/65R22.5 PRODUCTION TIRE
——— 275/80R22.5 PRODUCTION TIRE

*FIG. –13–*

## CARCASSE INFLATION GROWTH
### PRODUCTION TIRE

——— 455/55R22.5 PRODUCTION TIRE
– – – 445/50R22.5 PRODUCTION TIRE
——— 385/65R22.5 PRODUCTION TIRE
——— 275/80R22.5 PRODUCTION TIRE

*FIG. –14–*

**CARCASSE INFLATION GROWTH**
**CURRENT INVENTION**

——— 455/55R22.5 CURRENT INVENTION
– – – 445/50R22.5 CURRENT INVENTION
——— 385/65R22.5 CURRENT INVENTION
——— 275/80R22.5 CURRENT INVENTION

*FIG. –15–*

**DEVIATION FROM BASIS CURVE**
**PRODUCTION TIRE**

——— 455/55R22.5 PRODUCTION TIRE
– – – 445/50R22.5 PRODUCTION TIRE
——— 385/65R22.5 PRODUCTION TIRE
——— 275/80R22.5 PRODUCTION TIRE
——— P1 LIMITS
——— P2 LIMITS

*FIG. –16–*

DEVIATION FROM BASIS CURVE
CURRENT INVENTION

─────── 455/55R22.5 CURRENT INVENTION
─ ─ ─ ─ 445/50R22.5 CURRENT INVENTION
─────── 385/65R22.5 CURRENT INVENTION
─────── 275/80R22.5 CURRENT INVENTION
─────── P1 LIMITS
─────── P2 LIMITS

*FIG. −17−*

INFLATION GROWTH PARAMETERS

─────── 445/50R22.5 PRODUCTION TIRE

*FIG. −18−*

INFLATION GROWTH vs. P1

FIG. -19-

INFLATION GROWTH vs. P2

FIG. -20-

FIG. -21-

FIG. -22-

FIG. -23-

**EP 3 212 441 B1**

**REFERENCES CITED IN THE DESCRIPTION**

**Patent documents cited in the description**

- EP 0103984 A
- WO 2011070111 A
- FR 2796005